# FASCICULE DE BREVET EUROPEEN

(11) **EP 1 517 005 B1**
(45) Date de publication et mention de la délivrance du brevet: **03.01.2007**
(21) Numéro de dépôt: 04292228.6
(22) Date de dépôt: 17.09.2004
(51) Int. Cl.: F01D 11/00, F02C 7/28, F01D 25/24, F16J 15/08

(54) **Réalisation de l'étanchéité dans un turboréacteur pour le prélèvement cabine par joints double sens à lamelles**
Gasturbine mit einem Abdichtdelement mit Lamellenstruktur
Gas turbine sealing joint having lamellar structure

(30) Priorité: 19.09.2003 FR 0311020
(43) Date de publication de la demande: 23.03.2005
(73) Titulaire: SNECMA, 75015 Paris (FR)
(72) Inventeur: Lepetre, Gilles, 91860 Epinay-Sous-Senart (FR); Monville, Bernard, 91450 Etiolles (FR)
(74) Mandataire: Barbin le Bourhis, Joël

(56) Documents cités:
- FR-A- 2 649 463
- FR-A- 2 825 785
- FR-A- 2 829 796
- US-A- 5 797 723
- US-B1- 6 347 508

## Description

L'invention se rapporte à un turboréacteur comportant d'amont en aval, l'amont et l'aval étant définis par le sens de la circulation du flux primaire, un compresseur à haute pression, une grille de diffuseur et une chambre de combustion, ledit compresseur à haute pression comportant une virole externe délimitant radialement la veine dudit flux primaire et raccordée à une structure annulaire qui s'étend radialement vers l'extérieur, ladite grille de diffuseur comportant dans le prolongement axial de ladite virole externe de compresseur un carter externe raccordé à un jambage conique orienté vers l'arrière et délimitant en amont le fond de ladite chambre de combustion, ledit jambage étant lui-même raccordé à une virole externe de carter qui s'étend vers l'amont et est fixée à ladite structure annulaire par des moyens de fixation, ledit jambage, ladite virole externe de carter et ladite structure annulaire définissant une cavité autour de ladite grille de diffuseur, des orifices de prélèvement d'air étant ménagés dans ledit jambage pour mettre en communication le fond de chambre avec ladite cavité, ladite virole externe de carter étant équipée de bouches de sortie de l'air prélevé, et des moyens d'étanchéité étant prévus entre ladite structure annulaire et ledit carter externe de grille de diffuseur pour isoler ladite cavité de la veine du flux primaire.

Le prélèvement d'air nécessaire à la cabine de l'avion équipé d'au moins un turboréacteur est effectué en fond de chambre de combustion dans une zone où il perturbe le moins le rendement global du moteur. Le prélèvement s'effectue par les orifices du jambage, ce qui permet une implantation aisée des bouches de sortie de l'air prélevé. Cette disposition impose une étanchéité relative entre la veine du compresseur à haute pression et la cavité située au-dessus de la grille du diffuseur.

Cette étanchéité est d'autant plus difficile à réaliser que les déplacements relatifs entre la grille de diffuseur et la virole externe du compresseur sont de l'ordre de 1,5 mm dans la direction axiale et sensiblement du même ordre en radial, du fait des réponses thermiques et mécaniques des différentes pièces dans un environnement soumis à de fortes pressions pouvant atteindre 30 bars et à des températures élevées pouvant atteindre 650°C.

La technologie actuelle retenue pour assurer l'étanchéité entre le compresseur et le carter externe de la grille est du type joint à lamelle et contre-joint appuyés par des ressorts. Cette technologie permet en effet un déplacement suffisamment ample entre les deux pièces.

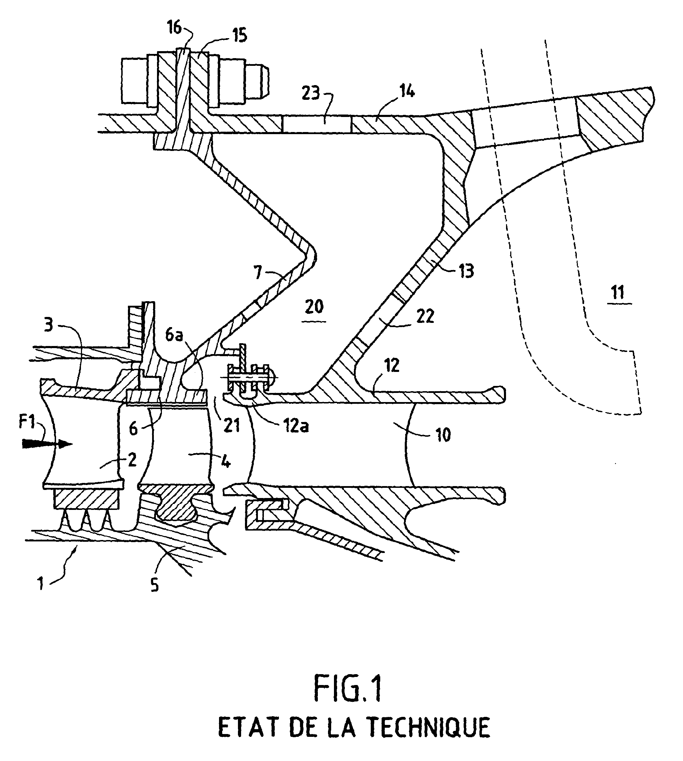

L'état de la technique est illustré par la figure 1 qui montre le dernier étage d'un compresseur à haute pression 1 d'un turboréacteur présentant, d'amont en aval dans le sens du flux primaire F1, une couronne d'aubes fixes 2 qui s'étendent radialement vers l'intérieur à partir d'un carter externe 3, suivie d'une couronne d'aubes mobiles 4 montées à la périphérie d'une roue de compresseur 5 et s'étendant vers l'extérieur jusqu'à une virole externe 6 de compresseur délimitant radialement avec le carter externe 3 la veine du flux primaire, cette virole externe 6 étant raccordée à une structure annulaire 7, ayant une section en V dans le plan contenant l'axe du turboréacteur, et s'étendant radialement vers l'extérieur et qui est fixée au carter externe du moteur par boulonnage.

En aval du compresseur 1 est prévue une grille de diffuseur 10 qui reçoit de l'air comprimé du compresseur 1 et la délivre vers une chambre de combustion 11. La grille 10 présente dans le prolongement axial de la virole externe 6 du compresseur 1 un carter externe 12 raccordé à un jambage conique 13 orienté vers l'arrière du turboréacteur, ce jambage 13 définit la paroi amont du fond de la chambre de combustion 11 et il est raccordé dan sa région radialement extérieure à une virole externe 14 de carter qui s'étend vers l'amont, et qui présente une bride amont 15 servant à la fixation par boulonnage de l'ensemble constitué par la chambre de combustion et le diffuseur sur une bride 16 radialement extérieure de la structure annulaire 7.

Une cavité 20, entourant la grille de diffuseur 10 est ainsi délimitée axialement par la structure annulaire 7 et le jambage 13, radialement à l'extérieur par la virole externe 14 de carter et radialement à l'intérieur par la portion aval 6a de la virole externe 6 de compresseur et par la portion amont 12a du carter externe 12, un interstice 21 séparant ces deux portions.

Le jambage 13 présente des orifices 22 de prélèvement d'air en fond de chambre et la virole externe 14 de carter est équipée de bouches de sortie 23 pour fournir un débit d'air pour l'aération de la cabine de l'avion ou pour le refroidissement d'autres éléments du turboréacteur.

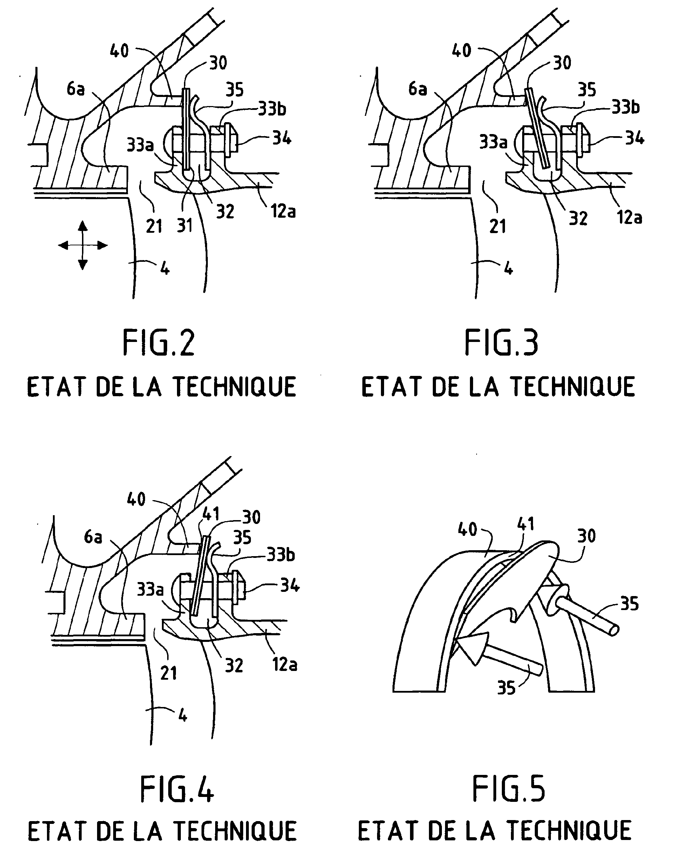

L'étanchéité entre la veine de compresseur et la cavité 20 est assurée, ainsi que cela est montré en détail sur la figure 2, par un joint sectorisé à lamelles 30 doublées de contrejoints 31, monté sur le pourtour de la portion amont 12a du carter externe 12 de la grille de diffuseur. A cet effet, cette portion amont 12a présente sur son pourtour une gorge 32 délimitée par deux brides, référencées 33a en amont et 33b en aval, qui comportent des perçages pour la fixation de rivets 34. Les lamelles 30 et les contrejoints 31 sont maintenus en appui sur la face aval de la bride amont 33a par des ressorts 35, et sont retenus par les rivets 34. Les ressorts 35 sont également retenus par les rivets 34. La portion radialement interne de la structure annulaire 7 présente un becquet annulaire 40 qui s'étend axialement dans la cavité 20 et dont l'extrémité se trouve au-dessus de la bride amont 33a en l'absence de déplacement axial entre la virole externe 6 du compresseur 1 et le carter externe 12 du diffuseur, comme cela est montré sur la figure 2.

Les ressorts 35 appuient sur les joints dans la zone annulaire séparant le becquet 40 de la bride amont 33a. D'autre part la pression de l'air est légèrement supérieure dans la cavité 20 par rapport à la pression dans la veine au niveau de l'interstice 21.

Les appuis des joints 30 côté becquet 40 et côté bride amont 33a comportent des surfaces convexes. Les efforts conjugués des ressorts 35 et de l'écart des pressions sur les deux faces des joints 30 appliquent les lamelles 30, qui sont planes, sur ces surfaces dans la configuration montrée sur la figure 2, ce qui assure l'étanchéité.

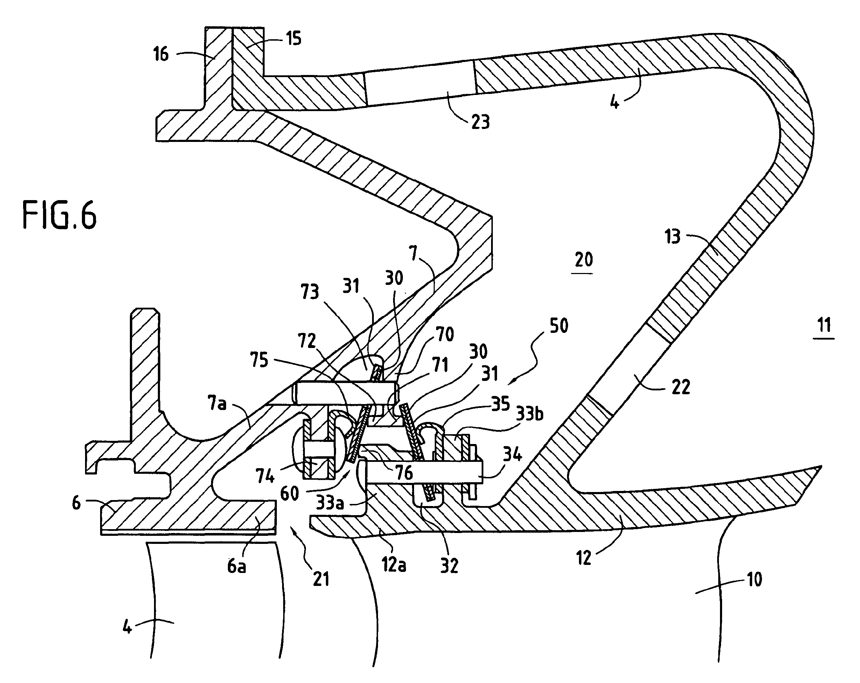

Dans certaines phase de vol, l'appui entre les lamelles 30 et le becquet 40 laisse un jeu de fuite, notamment lorsque le becquet 40 passe au-dessus de la gorge 32, comme cela est montré sur les figures 4 et 5. Entre deux ressorts consécutifs, les lamelles 30 s'écartent du becquet et seule la différence de pression entre les deux faces qui est faible peut empêcher la création de cet écartement. Il se produit alors un jeu de fuite 41 entre les lamelles et l'extrémité du becquet 40.

Lorsqu'au contraire la grille de diffuseur 10 s'éloigne du compresseur 1, comme cela est visible sur la figure 3, l'effort dû à l'écart de pression et l'effort des ressorts 35 permettent une étanchéité correcte, par déformation des lamelles 30.

Les doubles flèches montrées sur la figure 2 indiquent les déplacements relatifs axial et radial entre l'extrémité aval de la virole externe 6 de compresseur et l'extrémité amont du carter externe 12 de la grille de diffuseur 10.

Il est à noter en outre que la disposition de cette étanchéité portée par le carter externe 12 permet le montage de l'ensemble chambre de combustion et diffuseur, sur le compresseur par déplacement axial relatif dudit ensemble par rapport au compresseur, puis par boulonnage des brides externes 15 et 16.

Les publications US-A-6, 347, 508 et FR 2 829 796 divulgent des joints à lamelles qui assurent l'étanchéité entre la chambre de combustion et la rangée d'aubes directrices de la turbine.

Le but de l'invention est d'assurer une étanchéité parfaite entre la cavité et la veine du flux primaire quelles que soient les variations de l'interstice et quel que soit l'écart de pression de l'air entre les deux faces de la zone étanchée.

L'invention atteint son but par le fait que les moyens d'étanchéité comportent un premier et un second joints du type sectorisé à lamelles doublées de contrejoints et sollicitées par des ressorts, ledit premier joint étant monté dans une première rainure prévue autour de la partie amont du carter externe de la grille de diffuseur, les lamelles de ce premier joint étant en appui sur l'extrémité aval d'un premier becquet solidaire de la structure annulaire, et ledit deuxième joint étant monté dans une deuxième rainure prévue sous ladite structure annulaire, les lamelles de ce deuxième joint étant en appui sur l'extrémité amont d'un deuxième becquet solidaire de ladite structure annulaire et sur l'extrémité amont d'un troisième becquet solidaire de ladite partie amont de carter externe.

Le fait d'installer un second joint à fonctionnement inversé permet de répondre à toutes les variations de sens de l'écart de pression mais renforce aussi le système en apportant une difficulté de passage supplémentaire pour des gradients très faibles du fait de l'existence d'un sas entre les deux joints.

La première rainure est délimitée par une bride amont et une bride aval, le premier joint et les premiers ressorts étant retenus au moyen de rivets fixés sur lesdites brides, et le troisième becquet est formé sur la face amont de ladite bride amont.

La structure annulaire comporte une partie radialement intérieure orientée vers l'arrière, et la deuxième rainure est délimitée par ladite partie et une troisième bride située au-dessus de la bride amont, le premier becquet s'étendant vers l'aval à partir de l'extrémité radialement intérieure de ladite troisième bride, cette extrémité présentant en outre un deuxième becquet qui s'étend vers l'amont et sur lequel le deuxième joint est en appui.

D'autres avantages et caractéristiques de l'invention ressortiront à la lecture de la description suivante faite à titre d'exemple et en référence aux dessins annexés dans lesquels :
les figures 1 à 5 montrent l'état de la technique :
   la figure 1 étant une demi-coupe, selon un plan contenant l'axe du turboréacteur, de la partie aval d'un compresseur et du diffuseur, qui montre l'implantation de la cavité communiquant avec le fond de la chambre et dans lequel on prélève l'air pour la cabine de l'avion, et l'installation du joint d'étanchéité, selon l'état de la technique, entre cette cavité et la veine du flux primaire ;
   la figure 2 montre à plus grande échelle la disposition du joint d'étanchéité selon l'état de la technique ;
   la figure 3 montre la déformation du joint en cas d'augmentation de l'interstice entre la virole externe du compresseur et le carter externe de la grille du diffuseur ;
   la figure 4 montre la déformation de ce même joint en cas de diminution de cet interstice ;
   la figure 5 est une vue en perspective du joint d'étanchéité en cas de diminution de l'interstice qui montre le jeu de fuite ;
   la figure 6 montre le système d'étanchéité proposé par l'invention pour isoler la cavité de prélèvement de la veine du flux primaire ; et
   la figure 7 montre la manière de fixer entre eux le corps du compresseur et l'ensemble diffuseur - chambre de combustion.

Les figures 1 à 5 représentant l'état de la technique ont été décrites en détail dans l'introduction du présent mémoire et ne nécessitent pas d'autres explications.

La figure 6 montre le système d'étanchéité proposé par l'invention pour isoler la cavité 20 de la veine du flux primaire F1. Sur cette figure, les différents éléments délimitant la cavité 20 portent les mêmes références que les éléments identiques des figures 1 à 5.

Le système d'étanchéité comporte un premier joint d'étanchéité 50 monté à la périphérie de la portion amont 12a du carter externe 12 de la grille de diffuseur 10. Ce premier joint d'étanchéité étant semblable à celui de l'état de la technique illustré sur la figure 2, et un deuxième joint d'étanchéité 60 situé en amont du premier joint 50, également du type à lamelles, et porté par la partie 7a radialement intérieure de la structure annulaire 7 du compresseur.

A cet effet, cette partie 7a qui s'étend sensiblement parallèlement au jambage 13, présente au-dessus de la bride amont 33a, une troisième bride 70 qui s'étend radialement vers l'intérieur et dont l'extrémité radialement intérieure présente un premier becquet 71 qui s'étend vers l'aval et un deuxième becquet 72 qui s'étend vers l'amont.

Les lamelles 30 du premier joint 50 sont en appui sur l'extrémité libre du premier becquet 71. Ces lamelles sont retenues dans la rainure 32 séparant la bride amont 33a de la bride aval 33b par des rivets 34, et sont en appui sur la face aval de la bride amont 33a et sur l'extrémité libre du premier becquet 71 grâce aux ressorts 35 également retenus par les rivets 34 et appuyant sur la face amont de la bride aval 33b.

La troisième bride 70 délimite avec la partie 7a de la structure annulaire une gorge 73 ayant la fonction de la rainure 32. Des broches portées par la troisième bride 70 retiennent les régions radialement externes des lamelles 30 et contrejoints 31 du deuxième joint d'étanchéité 60.

La partie 7a comporte également en amont de la troisième bride des pattes 74 qui servent au maintien de deuxièmes ressorts 75 par rivetage, ces deuxièmes ressorts exerçant des forces sur les contrejoints 31 et lamelles 30 du deuxième joint 60 afin que ces lamelles appuient d'une part sur l'extrémité amont du deuxième becquet 72 et sur un troisième becquet 76 formé à la périphérie de la face amont de la bride amont 33a.

Les deux joints 50 et 60 décrits ci-dessus agissent chacun comme le joint de l'état de la technique décrit dans les figures 1 à 5, mais dans des sens opposés.

Pour éviter que l'un de ces joints ne prenne la configuration montrée sur les figures 4 et 5, l'étendue des premier 71 et deuxième 72 becquets est telle que ces becquets soient toujours disposés au-dessus de la bride amont 33a, quels que soient les déplacements relatifs axiaux de ces deux éléments en fonctionnement. En d'autres termes, la distance séparant les extrémités du premier becquet 71 et du deuxième becquet 72 est inférieure à l'épaisseur de la bride amont 33a augmentée de la longueur du troisième becquet 76.

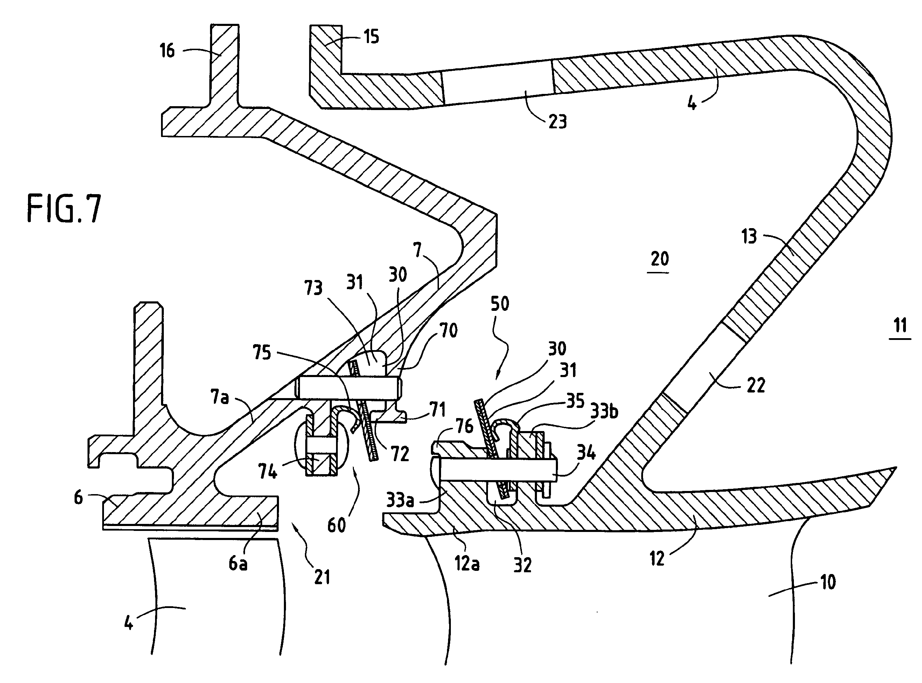

La figure 7 montre la disposition du premier joint 50 sur l'ensemble constitué par le diffuseur et la chambre de combustion, et la disposition du deuxième joint sur le compresseur avant le montage de ces deux pièces.

Ces deux pièces sont disposées axialement à distance l'une de l'autre, de façon qu'en les rapprochant axialement, le premier joint 50 vient en appui sur le premier becquet 71, et le deuxième joint 60 vient s'appuyer sur le troisième becquet 76. Lorsque la bride 16 de la structure annulaire 7 et la bride 15 de la virole externe de carter 14 sont dans une position d'accostage, il est possible de les fixer par boulonnage. Le montage se fait ainsi en aveugle.

## Revendications

1. Turboréacteur comportant d'amont en aval, l'amont et l'aval étant définis par le sens de la circulation du flux primaire, un compresseur (1) à haute pression, une grille de diffuseur (10) et une chambre de combustion, ledit compresseur à haute pression comportant une virole externe (6) délimitant radialement la veine dudit flux primaire et raccordée à une structure annulaire (7) qui s'étend radialement vers l'extérieur, ladite grille de diffuseur comportant dans le prolongement axial de ladite virole externe (6) de compresseur un carter externe (12) raccordé à un jambage (13) conique orienté vers l'arrière et délimitant en amont le fond de ladite chambre de combustion, ledit jambage étant lui-même raccordé à une virole externe de carter (14) qui s'étend vers l'amont et est fixée à ladite structure annulaire (7) par des moyens de fixation, ledit jambage, ladite virole externe de carter et ladite structure annulaire définissant une cavité (20) autour de ladite grille (10) de diffuseur, des orifices (22) de prélèvement d'air étant ménagés dans ledit jambage (13) pour mettre en communication le fond de chambre avec ladite cavité (20), ladite virole externe de carter étant équipée de bouches de prélèvement d'air (23), et des moyens d'étanchéité étant prévus entre ladite structure annulaire (7) et ledit carter externe (12) de grille de diffuseur pour isoler ladite cavité (20) de la veine du flux primaire, les moyens d'étanchéité comportant un premier (50) joint du type sectorisé à lamelles doublées de contrejoints et sollicitées par un ressort, ledit premier joint (50) étant monté dans une première rainure (32) prévue autour de la partie amont (12a) du carter externe (12) de la grille de diffuseur, les lamelles de ce premier joint étant en appui, sous l'action de premiers ressorts (35), sur l'extrémité aval d'un premier becquet (71) solidaire de la structure annulaire (7),
**caractérisé par le fait que** les moyens d'étanchéité comportent en outre un second (60) joint du type sectorisé à lamelles doublées de contrejoints et sollicitées par un ressort, ledit deuxième joint (60) étant monté dans une deuxième rainure (73) prévue sous ladite structure annulaire (7), les lamelles de ce deuxième joint étant en appui, sous l'action de deuxièmes ressorts (75), sur l'extrémité amont d'un deuxième becquet (72) solidaire de ladite structure annulaire et sur l'extrémité amont d'un troisième becquet (76) solidaire de ladite partie amont (12a) de carter externe.>

2. Turboréacteur selon la revendication 1, **caractérisé par le fait que** la première rainure (32) est délimitée par une bride amont (33a) et une bride aval (33b), le premier joint et les premiers ressorts étant retenues au moyen de rivets (34) fixés sur lesdites brides, et le troisième becquet (76) est formé sur la face amont de ladite bride amont (33a).

3. Turboréacteur selon la revendication 2, **caractérisé par le fait que** la structure annulaire (7) comporte une partie radialement intérieure (7a) orientée vers l'arrière, et la deuxième rainure (73) est délimitée par ladite partie (7a) et une troisième bride (70) située au-dessus de la bride amont (33a), le premier becquet (71) s'étendant vers l'aval à partir de l'extrémité radialement intérieure de ladite troisième bride (70), cette extrémité présentant en outre le deuxième becquet (72) qui s'étend vers l'amont et sur lequel le deuxième joint (60) est en appui.

4. Turboréacteur selon la revendication 3, **caractérisé par le fait que** les deuxièmes ressorts (75) sont fixés sur des pattes (74) formées sur ladite structure annulaire (7) indépendamment de la fixation par broches des lamelles et contrejoints du deuxième joint (60) dans la deuxième rainure (73).

## Claims

1. A jet engine comprising, from upstream to downstream (the upstream and downstream directions being defined by the direction of circulation of the primary flow), a high-pressure compressor (1), a diffuser grating (10) and a combustion chamber, said high-pressure compressor comprising an external shell (6) which radially delimits the duct for said primary flow and is connected to an annular structure (7) extending radially outward, said diffuser grating comprising in the axial continuation of said external compressor shell (6) an external casing (12) connected to a rearwardly oriented conical strut (13) delimiting, upstream, the end of said combustion chamber, said strut itself being connected to an external casing shell (14) which extends in the upstream direction and is fastened to said annular structure (7) by fastening means, said strut, said external casing shell and said annular structure defining a cavity (20) around said diffuser grating (10), air bleed orifices (22) being made in said strut (13) in order to bring the end of the combustion chamber into communication with said cavity (20), said external casing shell being equipped with air bleed vents (23), and sealing means being provided between said annular structure (7) and said external diffuser grating casing (12) in order to isolate said cavity (20) from the duct for the primary flow, said sealing means comprising a first (50) seal of the sectorized type made up of counterseal-lined strips which are urged by a spring, said first seal (50) being fitted in a first groove (32) provided around the upstream part (12a) of the external casing (12) of the diffuser grating, the strips of this first seal bearing, by means of the first springs, on the downstream end of a first projection (71) integral with the annular structure (7),
**characterized by** the fact that the sealing means further comprise a second seal (60) of the sectorized type made up of counterseal-lined strips which are urged by a spring, said second seal (60) being fitted in a second groove (73) provided under said annular structure (7), the strips of this second seal bearing, under the action of second springs (75) on the upstream end of a second projection (72) integral with said annular structure and on the upstream end of a third projection (76) integral with said upstream part (12a) of the external casing.

2. The jet engine according to claim 1, **characterized by** the fact that the first groove (32) is delimited by an upstream flange (33a) and a downstream flange (33b), the first seal and the first springs being retained by means of rivets (34) fastened on said flanges, and the third projection (76) is formed on the upstream face of said upstream flange (33a).

3. The jet engine according to claim 2, **characterized by** the fact that the annular structure (7) comprises a rearwardly oriented, radially inner part (7a), and the second groove (73) is delimited by said part (7a) and a third flange (70) situated above the upstream flange (33a), the first projection (71) extending in the downstream direction from the radially inner end of said third flange (70), this end additionally having the second projection (72) which extends in the upstream direction and on which the second seal (60) bears.

4. The jet engine according to claim 3, **characterized by** the fact that the second springs (75) are fastened to lugs (74) formed on said annular structure (7) independently of the fastening by means of rivets of the strips and counterseals of the second seal (60) in the second groove (73).

## Patentansprüche

1. Strahltriebwerk, das von stromaufwärts nach stromabwärts, wobei stromaufwärts und stromabwärts durch die Richtung der Zirkulation des Primärstroms definiert ist, einen Hochdruckkompressor (1), ein Diffusorgitter (10) und eine Verbrennungskammer aufweist, wobei der Hochdruckkompressor einen externen Ring (6) aufweist, die radial die Strömung des Primärstroms abgrenzt und an eine ringförmige Konstruktion (7) angeschlossen ist, die sich radial nach außen erstreckt, wobei das Diffusorgitter in der axialen Verlängerung des externen Kompressorrings (6) ein externes Gehäuse (12) aufweist, das an eine konische Stütze (13) angeschlossen ist, die nach hinten orientiert ist und stromaufwärts den Boden der Verbrennungskammer abgrenzt, wobei die Stütze selbst an einen externen Gehäusering (14) angeschlossen ist, der sich nach stromaufwärts erstreckt und an der ringförmigen Konstruktion (7) durch Befestigungsmittel befestigt ist, wobei die Stütze, der externe Gehäusering und die ringförmige Konstruktion einen Hohlraum (20) um das Diffusorgitter (10) bilden, wobei Luftentnahmeöffnungen (22) in der Stütze (13) vorgesehen sind, um den Kammerboden mit dem Hohlraum (20) zu verbinden, wobei der externe Gehäusering mit Luftentnahmeöffnungen (23) ausgestattet ist und Dichtmittel zwischen der ringförmigen Konstruktion (7) und dem externen Diffusorgittergehäuse (10) vorgesehen sind, um den Hohlraum (20) gegen die Strömung des Primärstroms zu isolieren, wobei die Dichtmittel eine erste Dichtung (50) vom sektorisierten Typ mit dublierten Lamellen von Gegendichtungen aufweist, die von einer Feder beaufschlagt werden, wobei die erste Dichtung (50) in einer ersten Nut (32) angebracht ist, die um den stromaufwärts gelegenen Teil (12a) des externen Gehäuses (12) des Diffursorgitters vorgesehen ist, wobei die Lamellen dieser ersten Dichtung unter der Wirkung von ersten Federn (35) am stromabwärts gelegenen Ende eines ersten Spoilers (71) anliegen, der mit der ringförmigen Konstruktion (7) fest verbunden ist,
**dadurch gekennzeichnet, dass** die Dichtmittel ferner eine zweite Dichtung (60) vom sektorisierten Typ mit dublierten Lamellen von Gegendichtungen aufweist, die von einer Feder beaufschlagt werden, wobei die zweite Dichtung (60) in einer zweiten Nut (73) angebracht ist, die unter der ringförmigen Konstruktion (7) vorgesehen ist, wobei die Lamellen dieser zweiten Dichtung unter der Wirkung von zweiten Federn (75) am stromaufwärts gelegenen Ende eines zweiten Spoilers (72) anliegen, der mit der ringförmigen Konstruktion fest verbunden ist, und am stromaufwärts gelegenen Ende eines dritten Spoilers (76), der mit dem stromaufwärts gelegenen Teil (12a) des externen Gehäuses fest verbunden ist.

2. Strahltriebwerk nach Anspruch 1, **dadurch gekennzeichnet, dass** die erste Nut (32) durch einen stromaufwärts gelegenen Flansch (33a) und einen stromabwärts gelegenen Flansch (33b) abgegrenzt ist, wobei die erste Dichtung und die ersten Federn mittels Nieten (34) gehalten werden, die an den Flanschen befestigt sind, und der dritte Spoiler (76) an der stromaufwärts gelegenen Seite des stromaufwärts gelegenen Flansches (33a) gebildet ist.

3. Strahltriebwerk nach Anspruch 2, **dadurch gekennzeichnet, dass** die ringförmige Konstruktion (7) einen radial inneren Teil (7a) aufweist, der nach hinten orientiert ist, und die zweite Nut (73) durch den Teil (7a) und einen dritten Flansch (70) abgegrenzt ist, der über dem stromaufwärts gelegenen Flansch (33a) liegt, wobei sich der erste Spoiler (71) ausgehend von dem radial inneren Ende des dritten Flansches (70) nach stromabwärts erstreckt, wobei dieses Ende ferner den zweiten Spoiler (72) aufweist, der sich nach stromaufwärts erstreckt und an dem die zweite Dichtung (60) anliegt.

4. Strahltriebwerk nach Anspruch 3, **dadurch gekennzeichnet, dass** die zweiten Federn (75) an Laschen (74) befestigt sind, die an der ringförmigen Konstruktion (7) unabhängig von der Befestigung der Lamellen und Gegendichtungen der zweiten Dichtung (60) in der zweiten Nut (73) durch Stifte gebildet sind.
